**Europäisches Patentamt**

(19) **European Patent Office**

**Office européen des brevets**

(11) Numéro de publication: **0 115 243**
**B1**

(12) **FASCICULE DE BREVET EUROPÉEN**

(45) Date de publication du fascicule du brevet:
08.04.87

(51) Int. Cl.⁴: **G 01 B 5/00**

(21) Numéro de dépôt: **83450002.7**

(22) Date de dépôt: **24.01.83**

(54) **Machine automatique de contrôle des cales étalons.**

(43) Date de publication de la demande:
**08.08.84 Bulletin 84/32**

(45) Mention de la délivrance du brevet:
**08.04.87 Bulletin 87/15**

(84) Etats contractants désignés:
**AT BE CH DE FR GB IT LI LU NL SE**

(56) Documents cité:
**EP-A-0 018 945**
**DE-A-2 616 752**
**FR-A-2 122 938**
**FR-A-2 161 158**
**GB-A-578 858**

(73) Titulaire: **GAME INGENIERIE Société Anonyme,
135 rue Pierre Ramond Caupian, F-33160 St
Medard en Jalles (FR)**

(72) Inventeur: **Chevrier, René, 13, Les Près l'Eglise
Pompignac, F-33370 Tresses (FR)**
Inventeur: **Schatz, Bernard, 11 rue des Mimosas,
F-91470 Limours (FR)**

(74) Mandataire: **Combe, André, CABINET BEAU DE
LOMENIE 55 rue d'Amsterdam, F-75008 Paris (FR)**

## Description

La présente invention a trait à une machine destinée à effectuer de manière entièrement automatique le contrôle de cales étalons et plus précisément la mesure par comparaison à un étalon de référence de l'épaisseur de cales parallélépipèdiques rectangles normalisées.

De telles cales servent d'étalons notamment pour de nombreux appareils de mesure et doivent donc être périodiquement vérifiés par référence à une cale étalon, de même longueur nominale et ayant préalablement été mesurée par une méthode interférentielle, donc connue à 0,02 à 0,04µm près.

Ces vérifications sont faites habituellement à l'aide d'un dispositif de mesure à deux touches en contact avec les deux faces de mesure de la cale à contrôler. Un tel dispositif de mesure est décrit dans la demande EP-A-0018 945.

Ces opérations de manipulation du dispositif de mesure et de mise en place et d'enlèvement des cales se font à la main ce qui prend du temps et monopolise un opérateur d'un bout à l'autre des vérifications.

Le but de l'invention est de proposer une machine apte à effectuer automatiquement toutes ces opérations sans autre intervention humaine que la mise en place d'une série de cales à vérifier, la mise en marche de la machine et l'enlèvement des cales après contrôle.

A cet effet, l'invention a pour objet une machine automatique de contrôle des cales étalons caractérisée en ce qu'elle comprend un magasin de stockage et présentation des cales étalons de référence et des cales étalons à contrôler, en forme de couronne plane circulaire montée autour d'un axe vertical sur un bâti support, des moyens pour entraîner pas à pas ladite couronne en rotation autour dudit axe vertical, des moyens de mesure de l'épaisseur des cales disposées à l'intérieur de la couronne et comprenant deux capteurs disposés en vis-à-vis, disposés de part et d'autre du plan de la couronne et mobiles relativement verticalement de façon à contacter chaque cale de part et d'autre de celle-ci, des moyens pour transférer vers un poste de transfert au moins une paire de cales disposées à plat, constituée d'une cale de référence et d'une cale à contrôler, depuis ladite couronne jusque dans l'axe de mesure des palpeurs, par translation horizontale sensiblement dans le plan de la couronne puis, après mesures de ladite épaisseur, ramener lesdites cales sur la couronne, des moyens pour déplacer les cales en translation horizontale dans leur plan, afin de présenter différents points des cales dans l'axe de mesure, des moyens pour enregistrer les mesures et des moyens pour commander et synchroniser les mouvements de la couronne, desdits moyens de transfert et de positionnement des cales et de déplacement des palpeurs de mesure en vue de contrôler séquentiellement toutes les cales à vérifier disposées sur la couronne.

D'autres caractéristiques et avantages ressortiront de la description qui va suivre d'un mode de réalisation de la machine ci-dessus, description donnée à titre d'exemple uniquement et en regard des dessins annexés sur lesquels :
- Fig. 1 représente une vue de dessus schématique d'une machine conforme à l'invention ;
- Fig. 2 représente une vue en coupe verticale axiale suivant la ligne II-II de la machine de la Fig. 1 ;
- Fig. 3 représente une vue de dessus agrandie et plus détaillée d'une partie de la machine de la Fig. 1 ;
- Fig. 4 représente une vue en coupe verticale suivant la ligne IV-IV de la machine de la Fig. 3,
- Fig. 5 représente une vue en coupe verticale suivant la ligne V-V de la machine de la Fig. 4, et

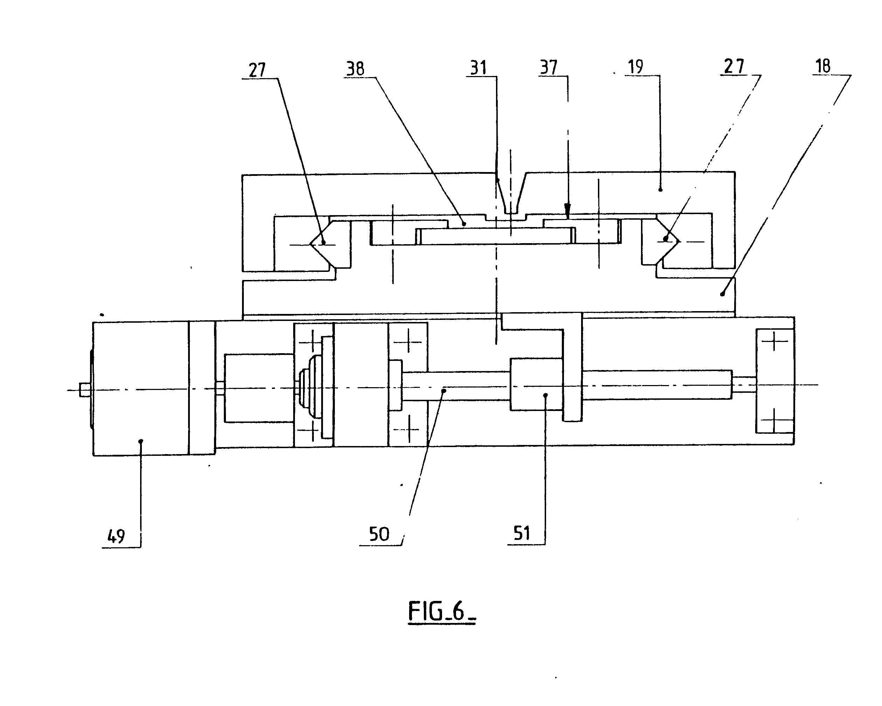

- Fig. 6 représente une vue de droite de la machine de la Fig. 3.

La machine représentée sur les dessins est constituée par un bâti support comportant une table horizontale massive I en granit montée sur pieds.

La table 1 supporte par l'intermédiaire d'un socle annulaire 2 une couronne circulaire plane 3 mobile autour d'un axe vertical 4. La couronne 3 repose sur un chemin de roulement circulaire désigné d'une manière générale en 5 et est entraînée en rotation par un pignon 6 en prise avec une couronne dentée 7 intérieure portée par la couronne 3. Le pignon 6 est mû par un système moteur indexeur 8 solidaire de la table 1.

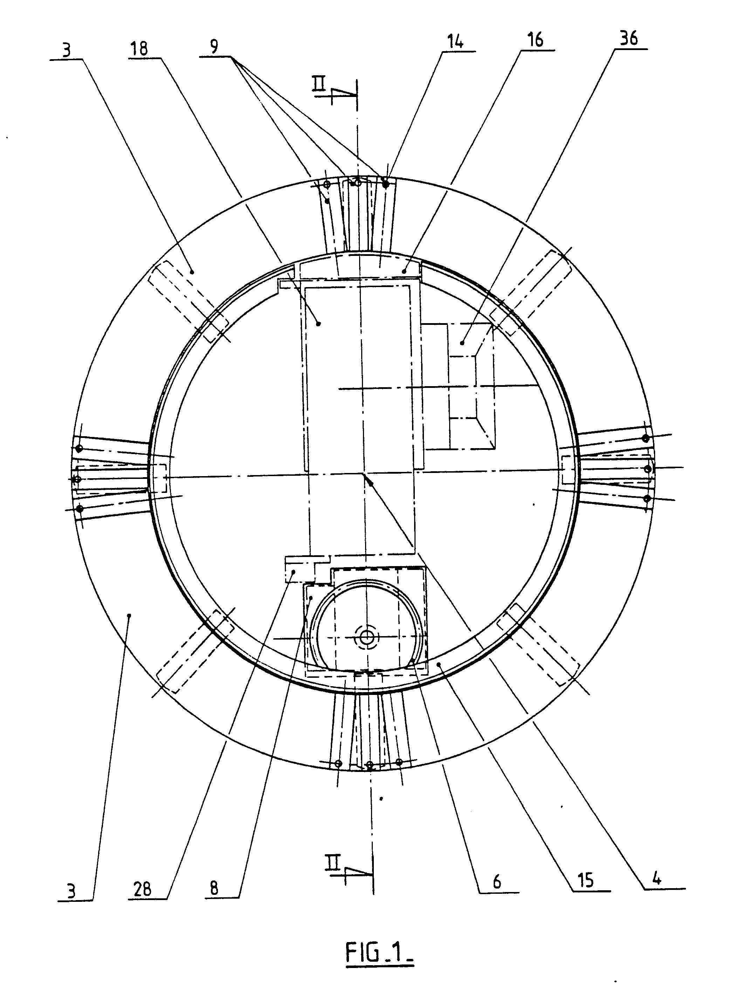

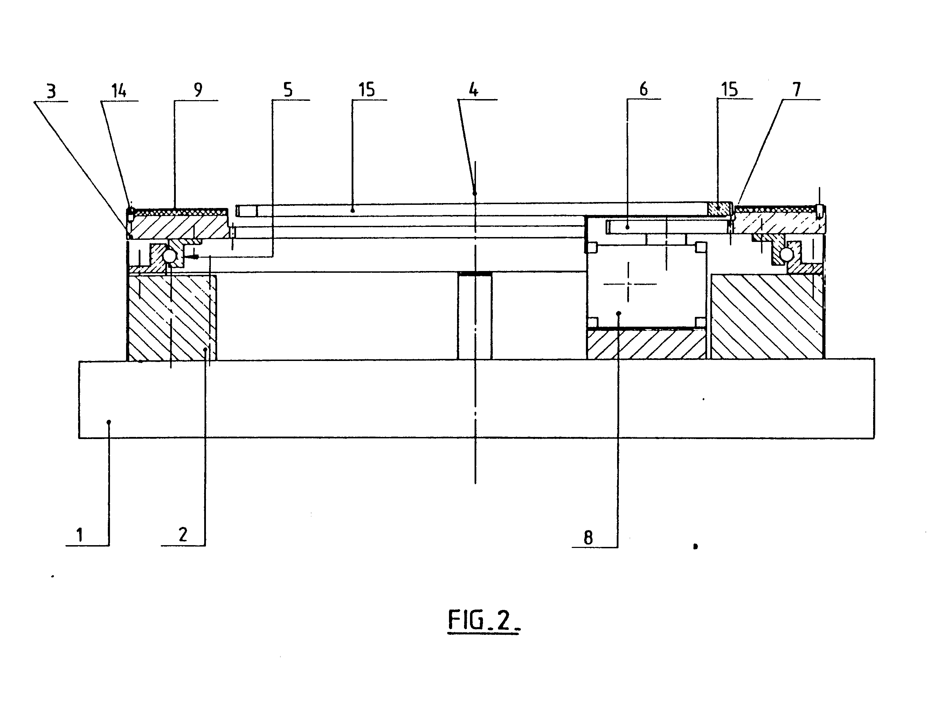

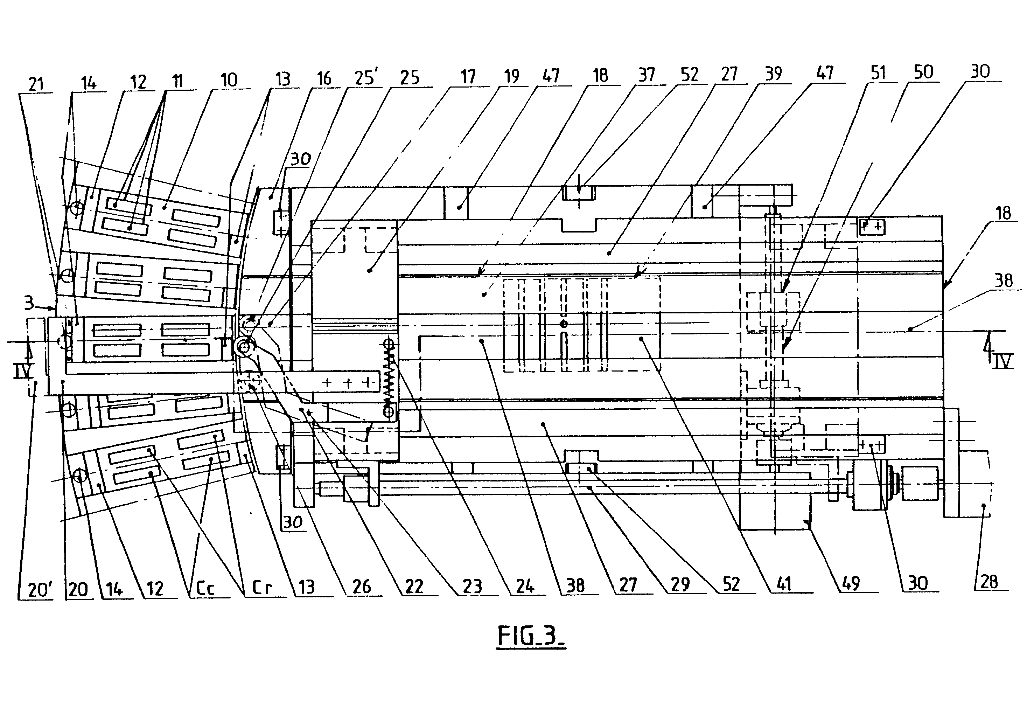

La couronne 3 comporte sur sa face plane supérieure une série de saignées radiales 9 (Fig. 1 et 2) identiques, à bords parallèles, destinées à recevoir chacune une plaquette 10 porte-cales (Fig. 3).

Dans le mode de réalisation représenté ces plaquettes 10 sont percées de quatre fenêtres rectangulaires 11 servant de logements à quatre cales. Ces logements sont disposés en deux paires de deux logements 11 côte à côte, l'un recevant une cale étalon de référence $C_R$, l'autre recevant une cale étalon à contrôler $C_C$.

Chaque plaquette 10 comporte à son extrémité tournée vers l'extérieur de la machine une surépaisseur ou talon 12 et, à son extrémité opposée une surépaisseur ou talon 13 sur une demi-largeur de la plaquette. La raison d'être de ces deux talons 12 et 13 apparaîtra plus loin.

Les plaquettes 10 sont positionnées correctement dans leur saignée 9 par un ergot butée 14 au voisinnage de la périphérie de la couronne 3.

A la périphérie intérieure de la couronne est disposé un guide circulaire 15 solidaire de la table 1 et servant de butée aux plaquettes 10. Le guide 15 est échancré (Fig. 1) sur une longueur d'arc déterminé au droit du dispositif de transfert des plaquettes 10 depuis la couronne 3 vers le centre de la machine. Cette échancrure est occupée par un seuil fixe 16 muni d'une saignée radiale 17 à bords parallèles de profondeur et de largeur correspondant respectivement à l'épaisseur et à la largeur des plaquettes 10.

Le seuil fixe 16 est de niveau avec un chariot 18 mobile perpendiculairement à l'axe de la saignée 17 et portant lui-même un chariot 19 mobile perpendiculairement à la direction de déplacement du chariot 18, c'est-à-dire parallèlement à la saignée 17.

Ce chariot 19 porte les organes de transfert des plaquettes 10 de la couronne 3 sur le chariot 18 et inversement. Ces organes comprennent un bras poussoir 20 de forme arquée pourvu à son extrémité de deux toucheaux 21 à hauteur des talons 12 des plaquettes 10.

Le chariot 19 porte également un culbuteur 22 monté pivotant autour d'un axe 23 et rappelé par un ressort 24. L'extrémité du culbuteur 22 comporte un galet fou 25 susceptible de coopérer avec les talons 13 des plaquettes 10. Le culbuteur 22 est commandé par un galet fixe 26 solidaire du seuil 16.

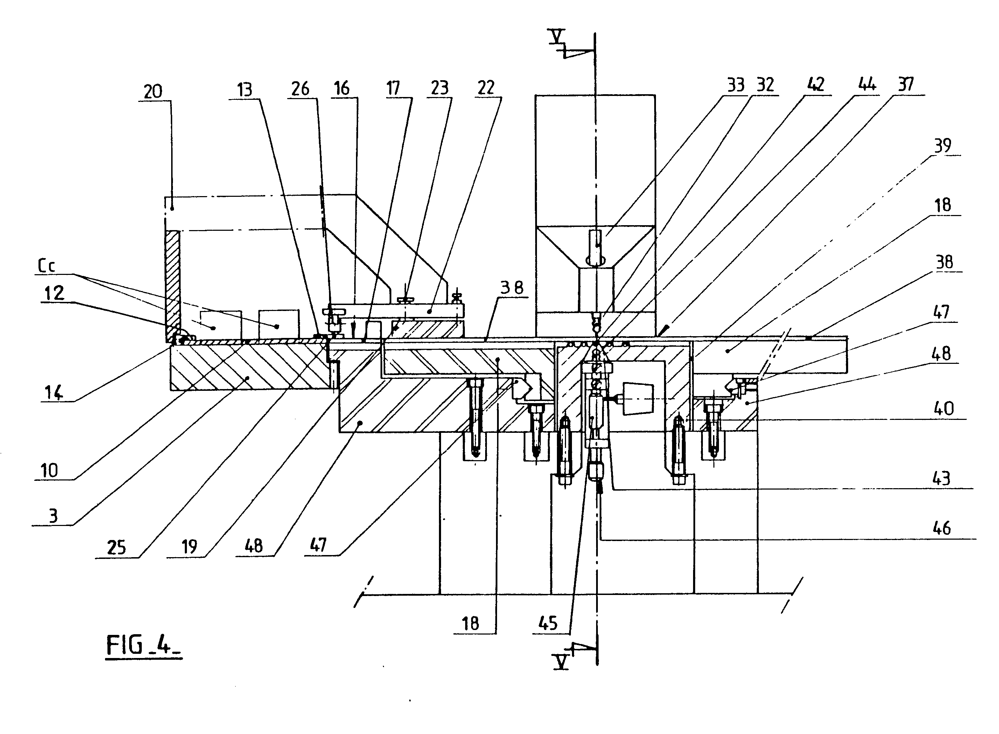

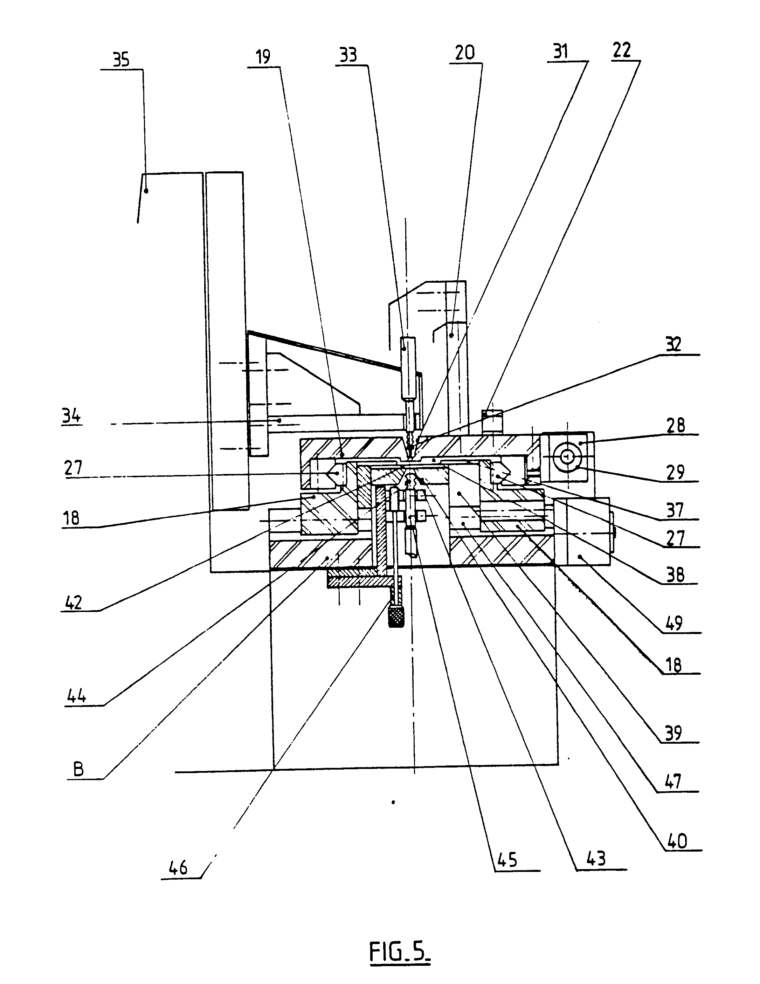

Le chariot 19 coulisse le long de deux glissières horizontales parallèles 27 fixées au chariot 18 (voir Fig. 5, celle-ci étant une coupe suivant V-V de la Fig. 4, le chariot 19 étant ramené dans le plan de coupe).

Le déplacement du chariot 19 est obtenu à partir d'un moteur électrique pas à pas 28 porté par le chariot 18 et entraînant le chariot 19 par un système de vis à billes 29.

La course du chariot 19 est limitée, côté couronne 3, par deux butées 30 et, côté opposé, par deux autres butées 30 fixées au chariot 18 (Fig. 3).

Le chariot 19 comporte sur sa face supérieure une gorge 31 parallèle à l'axe de la saignée 17 et permettant le libre passage du palpeur supérieur 32 du dispositif de mesure. Le palpeur 32 est monté mobile verticalement sur le capteur supérieur 33, lui-même monté à l'extrémité d'un bras 34 solidaire d'un socle 35 fixé au bâti de la machine et portant également une table de microcontrôle.

Le chariot 18 constitue par sa face supérieure une table plane horizontale 37 de niveau avec le seuil 16 et également munie d'une saignée 38 sur toute sa longueur, ayant les mêmes caractéristiques que la saignée 17 et parallèle à celle-ci.

Le chariot 18 présente dans sa partie centrale un évidement 39 permettant le libre passage d'un support 40 solidaire du bâti de la machine.

Le fond de la saignée 38 présente une fenêtre 41 au droit de l'évidement 39.

Le support 40 porte à sa partie supérieure une table à rouleaux horizontale 42 de niveau avec le fond de la saignée 38, les rouleaux étant orthogonaux à l'axe de la saignée 38.

Le support 40 comporte un évidement tronconique 43 permettant l'engagement du palpeur inférieur 44 dans l'axe du palpeur supérieur 32.

Le palpeur 44 est porté par le capteur inférieur 45 réglable en position verticalement à l'aide d'une vis 46, l'ensemble étant fixé au bâti.

Le chariot 18 peut coulisser le long de deux glissières horizontales parallèles 47 (Fig. 4) orthogonales à la saignée 38 et portées par un support 48 fixé au bâti. Le déplacement du chariot 18 se fait par un moteur électrique pas-à-pas 49 fixé au bâti et entraînant en rotation une vis à billes 50 coopérant avec un écrou 51 solidaire du chariot 18. La course du chariot 18 est limitée par des butées 52 solidaires du bâti.

Le fonctionnement du dispositif représenté et décrit ci-dessus est le suivant.

Les cales étalons à contrôler $C_C$ et les cales étalons de référence $C_R$ sont associées par paires constituées d'une cale $C_C$ et d'une cale $C_R$ placées côte-côte dans les logements 11 des plaquettes 10. Chaque plaquette 10 contient quatre cales et la couronne 3 peut contenir, par exemple, 64 plaquettes 10 disposées radialement.

Chaque paire de cales comprend deux cales parallélépipédiques identiques, mais la couronne 3 peut recevoir des paires de cales de dimensions différentes.

Le couronne 3 est entraînée pas à pas, ou en suivant un ordre programmé quelconque, en rotation de manière à présenter successivement chaque plaquette 10 devant la saignée 17 c'est-à-dire au poste de transfert de la plaquette de la couronne 3 sur la table 37 du chariot 18.

Le transfert se fait grâce au chariot 19 et au bras 20 arqué de manière à permettre le libre passage des cales sur la couronne 3 lors de la rotation de celle-ci.

Pour amener une plaquette 10 devant la saignée 17, le chariot 19 est tout d'abord mû vers la gauche en considérant la Fig. 3, à partir de la position représentée en traits pleins, de quelques millimètres. Ce déplacement fait passer en fin de course, grâce au galet fixe 26, le galet 25 en position 25' d'escamotage, cependant que le bras 20 passe en position 20' mettant les toucheaux 21 à l'extérieur de la trajectoire des butées 14.

La couronne 3 peut alors librement tourner et présenter la plaquette 10 désirée en regard des toucheaux 21. Une fois cette plaquette ainsi positionnée, le chariot 19 revient à la position en traits pleins sur la Fig. 3. Dans cette position, la plaquette 10 en question est pincée en quelque sorte entre les toucheaux 21 (de part et d'autre de la butée 14) contactant le talon 12 et le galet 25 du culbuteur 22 contactant élastiquement le talon 13.

Ainsi prise entre deux doigts, la plaquette 10 est amenée par le chariot 19 sur le seuil 16 puis sur la table 37 dans la saignée 38. La plaquette 10 est poussée par le bras 20 et glisse, ainsi que les cales qu'elle emprisonne, sur le fond des saignées 9, 17 et 38 jusque sur la table à rouleaux 42 et est positionnée de façon à présenter successivement les diverses cales dans l'axe de mesure délimité par l'alignement vertical des palpeurs 32 et 44.

Ces positionnements nécessitent le déplacement en translation de la plaquette 10 suivant deux axes rectangulaires et sont opérés par déplacement des chariots 18 et 19.

Au moment de la mesure le capteur supérieur 33 est abaissé et les palpeurs 32 et 44 amenés en contact avec les faces opposées de la cale à mesurer. Les mesures effectuées sont traditionnelles et consistent par exemple à mesurer en un seul point central la cale de référence $C_R$, puis en cinq points (aux quatre coins et au centre) la cale à contrôler $C_C$.

L'appareil de mesure est par exemple un contrôleur à affichage numérique effectuant des mesures en différentiel à l'aide de capteurs du type inductif à relevage pneumatique entre chaque mesure pour éviter tout effort transversal sur les palpeurs ainsi que des usures des cales pendant leur positionnement.

Après les mesures des différentes cales, la plaquette 10 est ramenée dans son logement sur la couronne 3 par les chariots 18 et 19 suivant le processus inverse.

Un nouveau cycle de mesure se déclenche automatiquement par l'amenée au poste de transfert de la plaquette 10 suivante selon le programme préétabli. En effet, l'automatisation et la synchronisation des divers mouvements mécaniques d'un cycle de mesure sont avantageusement réalisées par un micro-processeur qui, par l'intermédiaire d'interfaces et de cartes de commandes électriques spécifiques à chaque déplacement (moteur à courant continu, moteur pas-à-pas, électro-aimant ou électrovanne) assuie les mouvements des différents mécanismes suivant le cycle défini par programme.

Au micro-processeur est associé un calculateur programmable stockant les divers programmes de mesure et les données de mesure.

Le logiciel est conçu pour stocker ces données et assurer l'édition complète du rapport de contrôle. Toutefois, ce logiciel laisse le maximum de souplesse pour l'utilisation des divers dispositifs de la machine, pour les mises au point ainsi que pour des modifications du cycle de mesure.

La machine selon l'invention est spécifiquement destinée au contrôle de cales étalons parallélépipédiques rectangles, par exemple de longueur (épaisseur) nominale comprise entre 0,5 et 100 mm.

**Revendications**

1. Machine automatique de contrôle des cales étalons caractérisée en ce qu'elle comprend un magasin de stockage et présentation des cales étalons de référence et des cales étalons à contrôler, en forme de couronne plane circulaire (3) montée mobile autour d'un axe vertical (4) sur un bâti support (1), des moyens (6, 8) pour entraîner pas-à-pas ladite couronne (3) en rotation autour dudit axe vertical, des moyens de mesure de l'épaisseur des cales ($C_R$, $C_C$) disposés à l'intérieur de la couronne (3) et comprenant deux capteurs (33, 45) disposés en vis-à-vis selon une axe de mesure, de part et d'autre du plan de la couronne (39 et mobiles relativement verticalement de façon à contacter chaque cale ($C_R$, $C_C$) de part et d'autre de celle-ci, des moyens (19,20) pour transférer vers un poste de transfert au moins une paire de cales disposées à plat, constituée d'une cale de référence ($C_R$) et d'une cale à contrôler ($C_C$), depuis ladite couronne (3) jusque dans l'axe de mesure des capteurs (33, 45), par translation horizontale sensiblement dans le plan de la couronne (3) puis, après mesures de ladite épaisseur, ramener lesdites cales ($C_R$, $C_C$) sur la couronne (3), des moyens (19, 18) pour déplacer les cales ($C_R$, $C_C$) en translation horizontale dans leur plan afin de présenter différents points des cales ($C_R$, $C_C$) dans l'axe de mesure, des moyens pour enregistrer les mesures et des moyens pour commander et synchroniser les mouvements de la couronne (3), desdits moyens (18, 19) de transfert et de positionnement des cales ($C_R$, $C_C$) et de déplacement des capteurs de mesure (33, 45) en vue de contrôler séquentiellement toutes les cales ($C_R$, $C_C$) à vérifier disposées sur la couronne (3).

2. Machine suivant la revendication 1 caractérisée en ce que ladite couronne (3) comporte une série de saignées radiales identiques (9) destinées à recevoir chacune une plaquette (10) porte-cales percée d'un certain nombre de fenêtres (11) de dimensions correspondant à celles des cales ($C_R$, $C_C$) et dans lesquelles sont placées les cales de référence ($C_R$) et les cales à contrôler ($C_C$) de façon que le déplacement en translation de la plaquette (10) dans son plan, et suivant un axe de transfert, entraine celui des cales enchâssées dans la plaquette (10).

3. Machine suivant la revendication 2, caractérisée en ce que lesdits moyens de transfert et de positionnement des cales ($C_R$, $C_C$) depuis la couronne (3) jusque dans l'axe des capteurs (33, 45) sont constitués par une table plane horizontale (37) portée par un premier chariot (18) mobile perpendiculairement à l'axe de transfert de la plaquette (10) portant les cales à mesurer hors de la couronne (3) et par un second chariot (19), dit chariot de transfert, chargé de faire passer ladite plaquette (10) de la couronne (3) sur ladite table (37), ledit chariot de transfert (19) étant porté par ledit premier chariot (18) et mobile sur ce dernier perpendiculairement à la direction de déplacement dudit premier chariot (18).

4. Machine suivant la revendication 3, caractérisée en ce que ledit chariot de transfert (19) comporte un bras poussoir (20) susceptible de venir contacter l'extrémité (12) d'une plaquette (10), côté extérieur de la couronne (3), lorsque ladite plaquette (10) se trouve dans l'axe de transfert, et un organe escamotable (22) susceptible de contacter l'autre extrémité (13) de ladite plaquette (10) de manière à entraîner cette dernière par glissement sur le fond de ladite saignée (9) de la couronne (3) puis sur ladite table (37) du premier chariot (18) et inversement, au retour en place de ladite plaquette (10), des moyens étant prévus pour éloigner provisoirement des extrémités (12, 13) des plaquettes (10) les organes de contact (21, 25) dudit bras (20) et dudit organe escamotable (22) lors de la rotation de la couronne (3).

5. Machine suivant l'une des revendications 2 à 4, caractérisée en ce qu'entre la couronne (3) et la table (37) dudit premier chariot (18) est disposé un seuil fixe (16) de niveau avec la couronne (3) et la table (37) et pourvu d'une saignée de guidage (17) identique aux saignées (9) de la couronne (3) et disposée dans l'axe de transfert des plaquettes (10) depuis la couronne (3) sur la table (37).

6. Machine suivant l'une des revendications 3 à 5, caractérisée en ce que la table (37) du premier chariot (18) comporte une saignée de guidage (38) parallèle à l'axe de transfert des plaquettes (10) de la couronne (3) sur la table (37), le fond de ladite saignée (38) comportant une ouverture (41) surplombant une table à rouleaux (42) montée fixe, de niveau avec le fond de la saignée (38), et de part et d'autre de laquelle sont disposés les capteurs de mesure (33, 45).

7. Machine suivant la revendication 6 caractérisée en ce que les capteurs (33, 45) sont montés mobiles verticalement de manière à se rapprocher ou s'éloigner l'un de l'autre afin de mesurer les cales ($C_R$, $C_C$) par contact de part et d'autre de celles-ci lorsqu'elles sont amenées enchâssées dans leur plaquette (10) par le chariot de transfert (19) puis le premier chariot (18) sur ladite table à rouleaux (42) par glissement dans ladite saignée (38) de la table (37).

8. Machine suivant l'une des revendications 2 à 7, caractérisée en ce que les plaquettes (10) sont calées dans leur logement (9) de la couronne (3) par des butées extérieures (14) solidaires de la couronne (3) et par un guide circulaire fixe (15), du côté intérieur de la couronne (3), ledit guide (15) étant interrompu au droit du poste de transfert des plaquettes (10).

9. Machine suivant l'une des revendications 1 à 8, caractérisée en ce que les divers mouvements des organes mobiles sont automatisés et synchronisés à l'aide d'un microprocesseur permettant la mesure séquentielle de diverses cales de la couronne (3) et leur enregistrement suivant un programme prédéterminé.

**Patentansprüche**

1. Automat zum Kontrollieren von Endmaßen, dadurch gekennzeichnet, daß er ein Magazin zur Lagerung und Präsentation von Bezugs-Endmaßen und von zu kontrollierenden Endmaßen in Form eines planen Kreisrings (3), der um eine vertikale Achse (4) beweglich auf einem Trägergestell (1) montiert ist, Mittel (6, 8) zum schrittweisen Antreiben des Rings (3) in Rotation um die vertikale Achse, Mittel zum Messen der Stärke der Endmaße ($C_R$, $C_C$), die

innerhalb des Rings (3) angeordnet sind und zwei gemäß einer Meßachse beiderseits der Ebene des Rings (3) gegenüberliegende und zum Berühren jedes Endmaßes ($C_R$, $C_C$) beiderseits desselben vertikal zueinander bewegliche Meßfühler (33, 45) umfassen, Mittel (19, 20) zum Verlagern von mindestens einem Paar flach liegender, aus einem Bezugs-Endmaß ($C_R$) und einem zu kontrollierenden Endmaß ($C_C$) bestehender Endmaße zu einer Verlagerungsstelle, vom Ring (3) bis in die Meßachse der Meßfühler (33, 45) durch Horizontalverschiebung im wesentlichen in der Ebene des Rings (3), und dann, nach dem Messen besagter Stärke Zurückbringen der Endmaße ($C_R$, $C_C$) auf den Ring (3), Mittel (19, 18) zum Verschieben der Endmaße ($C_R$, $C_C$) horizontal in ihrer Ebene zur Präsentation verschiedener Punkte der Endmaße ($C_R$, $C_C$) in der Meßachse, Mittel zum Aufzeichnen der Messungen und Mittel zum Steuern und Synchronisieren der Bewegungen des Rings (3) und der Mittel (18, 19) zum Verlagern und Positionieren der Endmaße ($C_R$, $C_C$) und zum Verschieben der Meßfühler (33, 45) zwecks fortlaufender Kontrolle sämtlicher zu überprüfender, auf dem Ring (3) liegender Endmaße ($C_R$, $C_R$) umfaßt.

2. Automat nach Anspruch 1, dadurch gekennzeichnet, daß der Ring (3) eine Reihe von identischen radialen Schlitzen (9) zur Aufnahme jeweils einer Endmaß-Trägerplatte (10) umfaßt, die von einer bestimmten Anzahl von Fenstern (11) mit jenen der Endmaße ($C_R$, $C_C$) entsprechenden Dimensionen perforiert ist, in welchen die Bezugs-Endmaße ($C_R$) und die zu kontrollierenden Endmaße ($C_C$) derart plaziert sind, daß die Verschiebung der Platte (10) in ihrer Ebene und gemäß einer Verlagerungsachse auch die der in der Platte (10) eingesteckten Endmaße bewirkt.

3. Automat nach Anspruch 2, dadurch gekennzeichnet, daß die Mittel zum Verlagern und Positionieren der Endmaße ($C_R$, $C_C$) vom Ring (3) bis zur Achse der Meßfühler (33, 45) durch einen horizontalen planen Tisch (37) gebildet sind, der von einem ersten, senkrecht zur Verlagerungsachse der die zu messenden Endmaße außerhalb des Rings (3) tragenden Platte (10) beweglichen Schlitten (18) und von einem zweiten Schlitten (19), dem sogenannten Verlagerungsschlitten, zum Befördern der Platte (10) vom Ring (3) auf den Tisch (37), getragen ist, wobei der Verlagerungsschlitten (19) vom ersten Schlitten (18) getragen und auf diesem senkrecht zur Verschieberichtung des ersten Schlittens (18) beweglich ist.

4. Automat nach Anspruch 3, dadurch gekennzeichnet, daß der Verlagerungsschlitten (19) einen Schubarm (20), der in Kontakt mit dem Ende (12) einer Platte (10) an der Außenseite des Rings (3) kommen kann, wenn sich die Platte (10) in der Verlagerungsachse befindet, und ein ein- und ausziehbares Organ (22) umfaßt, welches das andere Ende (13) der Platte (10) derart kontaktieren kann, daß letztere durch Gleiten auf den Boden des Schlitzes (9) des Rings (3) und dann auf den Tisch (37) des ersten Schlittens (18) und, umgekehrt, zurück auf ihren Platz mitgenommen wird, wobei Mittel (12, 13) zum provisorischen Wegbewegen der Kontaktorgane (21, 25) des Arms (20) und des ein- und ausziehbaren Organs (22) von den Enden (12, 13) der Platten (10) bei Rotation des Rings (3) vorgesehen sind.

5. Automat nach einem der Ansprüche 2 bis 4, dadurch gekennzeichnet, daß zwischen dem Ring (3) und dem Tisch (37) des ersten Schlittens (18) eine fixe Schwelle (16) auf gleichem Niveau mit dem Ring (3) und dem Tisch (37) angeordnet ist, die mit einem den Schlitzen (9) des Rings (3) identen Führungsschlitz (17) versehen ist, welcher in der Verlagerungsachse der Platten (10) vom Ring (3) auf den Tisch (37) vorgesehen ist.

6. Automat nach einem der Ansprüche 3 bis 5, dadurch gekennzeichnet, daß der Tisch (37) des ersten Schlittens (18) einen Führungsschlitz (38) parallel zur Achse der Verlagerung der Platten (10) vom Ring (3) auf den Tisch (37) umfaßt, wobei der Boden des Schlitzes (38) eine einen auf gleichem Niveau mit dem Boden des Schlitzes (38) fix montierten Rollentisch (42) überragende Öffnung (41) aufweist, wobei beidseitig davon die Meßfühler (33, 45) angeordnet sind.

7. Automat nach Anspruch 6, dadurch gekennzeichnet, daß die Meßfühler (33, 45) derart vertikal beweglich montiert sind, daß sie einander näherkommen bzw. sich voneinander entfernen können, um die Endmaße ($C_R$, $C_C$) durch beidseitigen Kontakt derselben, wenn sie, in ihrer Platte (10) eingesteckt, vom Verlagerungsschlitten (19) und dann vom ersten Schlitten (18) auf den Rollentisch (42) durch Gleiten im Schlitz (38) des Tisches (37) mitgenommen werden, zu messen.

8. Automat nach einem der Ansprüche 2 bis 7, dadurch gekennzeichnet, daß die Platten (10) durch mit dem Ring (3) verbundene Außenanschläge (14) und durch eine an der Innenseite des Rings (3) befestigte Kreisführung (15) in ihrem Sitz (9) im Ring (3) blockiert sind, wobei die Führung (15) an der Verlagerungsstelle der Platten (10) unterbrochen ist.

9. Automat nach einem der Ansprüche 1 bis 8, dadurch gekennzeichnet, daß die verschiedenen Bewegungen der beweglichen Organe mit Hilfe eines Mikroprozessors, der die fortlaufende Messung verschiedener Endmaße des Rings (3) und ihre Aufzeichnung entsprechend einem vorbestimmten Programm gestattet, automatisch und synchron erfolgen.

## Claims

1. Automatic gage measuring machine characterized in that it comprises a magazine for storing and displaying standard gages and gages to be tested, in the form of a flat circular ring (3) mounted for rotational movement about a vertical axis (4) on a support frame (1), means (6, 8) for driving said rim (3) in rotation stepwise about said vertical axis, means for measuring the thickness of the gages ($C_R$, $C_C$), which are placed inside the ring (3) and comprise two sensors (33, 45) placed in facing relationship according to a measuring axis on either side of the plane of the ring (3) and movable relatively vertically in such a way as to come into contact with each gage ($C_R$, $C_C$) on either side thereof, means (19, 20) for transferring towards a transfer station at least one pair of gages flatwise, said pair being constituted by a standard gage ($C_R$) and a gage to be tested ($C_C$), from said ring (3) to inside the measuring axis of the sensors (33, 45), by horizontal translation substantially inside the plane of the ring (3), then, after measuring said thickness, for returning said gages ($C_R$, $C_C$) on the ring (3), means (19, 18) for moving the gages ($C_R$, $C_C$) in horizontal translation inside their plane, in order to present different points of the gages ($C_R$, $C_C$) in the measuring axis, means for recording the measurements and means for controlling and synchronizing the movements of the ring (3).

2. Machine according to claim 1, characterized in that said ring (3) comprises a series of identical radial slots (9) each one of which is adapted to receive a gage-support plate (10) provided with a number of apertures (11) of dimensions corresponding to the gages ($C_R$, $C_C$) dimensions and in which are housed the standard gages ($C_R$) and the gages to be tested ($C_C$) so that the translational displacement of the plate (10) inside its plane and along a transfer axis, entails the displacement of the gages housed in the plate (10).

3. Machine according to claim 2, characterized in that said means for transferring and positioning the gages ($C_R$, $C_C$) from the ring (3) as far as inside the axis of the sensors (33, 45) are constituted by a flat horizontal table (37) carried by a first carriage (18) which is movable perpendicularly to the transfer axis of plate (10) carrying the gages to be tested out of the ring (3) and by a second carriage (19) called transfer carriage, the role of which is to transfer said gage-support plate (10) from the ring (3) onto said table (37), said transfer carriage (19) being carried by said first carriage (18) and being movable on the latter perpendicularly to the direction of displacement of said first carriage (18).

4. Machine according to claim 3, characterized in that said transfer carriage (19) comprises a push arm (20) adapted to come into contact with the end (12) of a support plate (10), on the external side of the ring (3), whereas said support plate (10) is situated in the transfer axis, and a rocker arm (22) adapted to come into contact with the other end (13) of said support plate (10) in such a way as to carry the latter into a sliding movement on the bottom of said slot (9) of the ring (3) and then onto said table (37) of the first carriage (18) and vice-versa to return said support plate (10) to its original position, means being provided for temporarily moving away from the ends (12, 13) of the support plates (10), the contact members (21, 25) of said arm (20) and of said rocker arm (22) during the rotation of the ring (3).

5. Machine according to one of claims 2 to 4, characterized in that between the ring (3) and the table (37) of said first carriage (18) is positioned a fixed sill (16) which is level with the ring (3) and the table (37) and provided with a guide slot (17) identical to the slots (9) of the ring (3) and placed in the axis of transfer of the plates (10) from the ring (3) on to the table (37).

6. Machine according to one of claims 3 to 5, characterized in that the table (37) of the first carriage (18) comprises a guide slot (38) parallel to the axis of transfer of the support-plates (10) from the ring (3) onto the table (37), the bottom of said slot (38) being provided with an opening (41) surmounting a fixed table (42) with rollers, which is level with the bottom of the slot (38), and on either side of which are placed the measuring sensors (33, 45).

7. Machine according to claim 6, characterized in that the sensors (33, 45) are mounted for moving vertically so as to be close together or apart in order to measure the gages ($C_R$, $C_C$) by contacting with either side thereof when said gages are brought, while set in their support-plate (10) by the transfer carriage (19) and then by the first carriage (18) on said roller table (42) by sliding in said slot.

8. Machine according to one of claims 2 to 7, characterized in that the gage-support plates (10) are wedged in position in their housing (9) in the ring (3) by external stops (14) integral with ring (3) and by a fixed circular guide means (15), on the inside of the ring (3) said guide means (15) being cut away in line with the gage-support plates (10) transfer means.

9. Machine according to one of claims 1 to 8, characterized in that the various movements of the movable members are mechanized and synchronized by means of a microprocessor which enables the sequential measurement of various gages from the ring (3) and the recording of same according to a predetermined program.

0 115 243

FIG.1

0 115 243

FIG. 2.

3

FIG.3

0 115 243

FIG_4_

FIG.5.

FIG.6

27  38  31  37  19  27  18

49  50  51

0 115 243